## Europäisches Patentamt
## European Patent Office
## Office européen des brevets

(11) Veröffentlichungsnummer: **0 109 574**
**B1**

(12) **EUROPÄISCHE PATENTSCHRIFT**

(45) Veröffentlichungstag der Patentschrift: **02.03.88**

(51) Int. Cl.⁴: **G 09 G 1/00**, G 06 F 15/20

(21) Anmeldenummer: **83110604.2**

(22) Anmeldetag: **24.10.83**

(54) **Anordnung zum Darstellen von Texten.**

(30) Priorität: **27.10.82 DE 3239842**

(43) Veröffentlichungstag der Anmeldung:
**30.05.84 Patentblatt 84/22**

(45) Bekanntmachung des Hinweises auf die
Patenterteilung:
**02.03.88 Patentblatt 88/09**

(84) Benannte Vertragsstaaten:
**CH DE FR GB IT LI SE**

(56) Entgegenhaltungen:
**DE-A-2 606 491**
**DE-A-3 138 734**
**US-A-3 827 041**
**US-A-4 354 184**

**IBM TECHNICAL DISCLOSURE BULLETIN,**
**Band 15, Nr. 5, Oktober 1972, Seiten 1553-1554,**
**New York, US; W.W. BOYD et al.: "Line number**
**- display attachment"**

(73) Patentinhaber: **Siemens Aktiengesellschaft**
**Berlin und München**
**Wittelsbacherplatz 2**
**D-8000 München 2 (DE)**

(72) Erfinder: **Müller, Wolfgang, Dipl.-Ing.**
**Makartstrasse 21**
**D-8000 München 71 (DE)**
Erfinder: **Sendlinger, Harald, Dipl.-Ing.**
**Eschenrieder Strasse 9**
**D-8060 Dachau (DE)**

Courier Press, Leamington Spa, England.

## Beschreibung

Die Erfindung bezieht sich auf eine Anordnung zum Darstellen von Texten entsprechend dem Oberbegriff des Patentanspruchs 1.

Aus der US—A—3,827,041 ist eine Anordnung zum Darstellen von Texten an einem Bildschirm eines Sichtgerätes bekannt, bei der die Texte in einem Speicher gespeichert sind und am Bildschirm dargestellt werden. In dem Speicher können mehr Nachrichten gespeichert werden als gleichzeitig am Bildschirm darstellbar sind. Für die Orientierung eines Benutzers, aus welchem Speicherbereich ein am Bildschirm dargestellter Text stammt, wird der Speicher in mehrere Segmente eingeteilt und durch Markierungen wird am Bildschirm dargestellt, aus welchem Speicherbereich der gerade dargestellte Text stammt.

Bei der Darstellung eines Textes an einem Bildschirm eines an einer Fernschreibmaschine oder einer Textstation vorgesehenen Sichtsgeräts ist es gelegentlich nicht möglich zu erkennen, ob der Text bereits beendet ist oder ob noch ein weiterer Text folgt. Dies ist insbesondere dann der Fall, wenn zwischen einzelnen Absätzen des Textes mehrere Leerzeilen vorgesehen sind. In diesem Fall ist es auch nicht möglich zu erkennen, ob ein, beispielsweise in der Mitte des Bildschirms dargestellter Text zu einem vorhergehenden Text oder zu einem nachfolgenden Text gehört oder einen eigenständigen Text darstellt. Die Texte können beispielsweise Nachrichten sein, die an einer Fernschreibmaschine erstellt werden und zu einem fernen Teilnehmer übertragen werden. In diesem Fall ist es nicht möglich zu entscheiden, ob eine dargestellte Nachricht gemeinsam mit der vorhergehenden oder der nachfolgenden übertragen werden soll oder für sich selbst übertragen werden soll.

Der Erfindung liegt daher die Aufgabe zugrunde, eine Anordnung zum Darstellen von Texten anzugeben, die es ermöglicht, dargestellte Texte auf einfache Weise als zusammengehörend zu kennzeichnen.

Erfindungsgemäß wird die Aufgabe bei der Anordnung der eingangs genannten Art durch die im kennzeichnenden Teil des Patentanspruchs 1 angegebenen Merkmale gelöst.

Die Anordnung gemäß der Erfindung hat den Vorteil, daß auf einfache Weise und ohne Beeinträchtigung des Textes sofort die Zugehörigkeit zu einem vorhergehenden, einem nachfolgenden oder einem eigenständigen Text erkannt werden kann.

Es ist möglich, die Markierungen nur am Anfang und am Ende des Textes darzustellen. Die Markierungen können dabei am linken und/oder am rechten Rand des Textes dargestellt werden. Es ist auch möglich, zwischen den Markierungen weitere Markierungen darzustellen, so daß sich die Markierungen über den gesamten Text erstrecken. Zweckmäßigerweise werden die Markierungen strichförmig ausgebildet, so daß ein zusammenhängender Texte durch eine am Rand dargestellte Linie gekennzeichnet wird. Diese linie kann zusätzlich Formatkennzeichen enthalten, um dem Benutzer anzuzeigen, welche Textteile bei einem Ausdrucken des Textes auf einer Seite zusammengefaßt werden können. Die Formatkennzeichen können beispielsweise einen Bereich anzeigen, der einer Seite DIN A4, Hochformat oder einer Seite DIN A5, Querformat entspricht. Bei der Formatkennzeichnung kann dabei der eingestellte Zeilenabstand berücksichtigt werden. Es ist in jedem Fall zweckmäßig, auf dem Bildschirm den Text immer einzeilig darzustellen, unabhängig von der Darstellung auf dem Aufzeichnungsträger. Die Formatkennzeichen sind somit, in Abhängigkeit von dem eingestellten Zeilenabstand an unterschiedlichen Stellen am Bildschirm dargestellt.

Die die Markierungen darstellende Steuereinheit ist zweckmäßigerweise als Mikrorechner ausgebildet, der auch gleichzeitig die übrigen durchzuführenden Funktionen in der Fernschreibmaschine oder in der Textstation steuert. Für die Formatkennzeichnung muß ein Speicher vorgesehen sein, in dem das jeweilige Format gespeichert ist und ein weiterer Speicher muß den eingestellten Zeilenabstand enthalten. Die Steuereinheit steuert dann die Darstellung der entsprechenden Formatkennzeichen.

Weiterhin ist es möglich, neben den Markierungen eine Seitennummer darzustellen, die die jeweilige Druckseite kennzeichnet. Bei der Kennzeichnung des zusammenhängenden Textes durch eine Linie kann diese Seitennummer auch innerhalb der Linie eingeblendet sein.

Im folgenden wird ein Ausführungsbeispiel der Anordnung gemäß der Erfindung anhand von Zeichnungen näher erläutert. Es zeigen

Fig. 1 eine Darstellung eines Textes, bei dem der Anfang und das Ende jeweils durch eine strichförmige Markierung gekennzeichnet ist.

Fig. 2 eine Darstellung eines Textes, bei dem weitere Markierungen vorgesehen sind, die eine zusammenhängende Linie bilden.

Fig. 3 eine Darstellung eines Textes, bei dem die Markierungen eine Linie bilden und zusätzlich Formatkennzeichen und eine Seitennummer angegeben sind.

Fig. 4 ein Blockschaltbild der Anordnung.

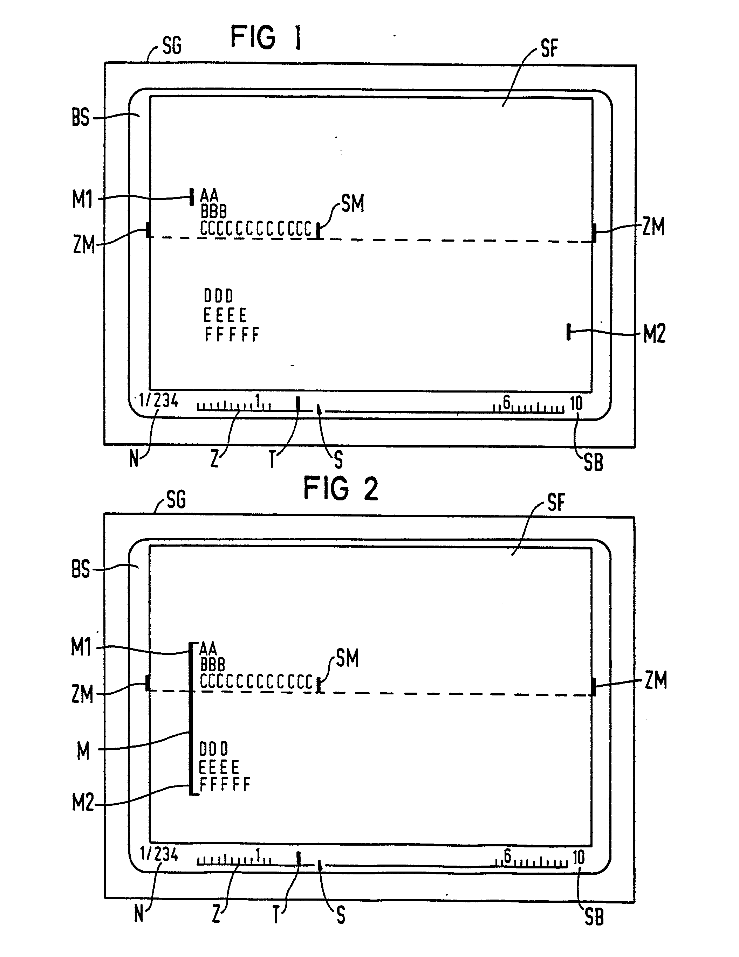

Das in Fig. 1 dargestellte Sichtgerät SG, das Bestandteil einer Fernschreibmaschine oder einer Textstation ist, enthält einen Bildschirm BS, auf dessen Schreibfeld SF ein Text dargestellt ist. Der Text wird aus den Buchstaben A bis F gebildet. Der Text stellt eine Nachricht dar, die beispielsweise von der Fernschreibmaschine zu einem fernen Teilnehmer übertragen werden soll. Die Nachricht ist in einem Nachrichtenspeicher der Fernschreibmaschine gespeichert. Die Nachrichtennummer N wird in einem vorgegebenen Anzeigebereich auf dem Bildschirm BS dargestellt. Zusätzlich wird dort ein Zeilenlineal Z dargestellt, auf dem Tabulatormarken T und eine Schreibstellenanzeige S darstellbar sind. Die Schreibstellenanzeige S wird gleichzeitig mit einer Schreibmarke SM in horizontaler Richtung bewegt. Diese Schreibmarke SM Kennzeichnet jeweils die Stelle, an der ein Zeichen im Schreibfeld SF änderbar ist. Die Schreibmarke SM bewegt sich jeweils in einer Schreibzeile, die durch zwei Zeilenmarken ZM zu beiden Seiten des Schreibfelds SF gekennzeichnet ist. In dem vorgegebenen Anzeigebereich wird zusätzlich ein noch freier Speicherbereich SB dargestellt, um dem Bediener noch die Anzahl der zu beschreibenden Seiten auf einem peripheren Speicher anzuzeigen.

Der Anfang und das Ende des dargestellten Textes werden durch zwei Markierungen M1 und M2 gekennzeichnet. Auf diese Weise wird deutlich, daß der Text bei dem dargestellten Beispiel einer einzigen Nachricht und nicht zwei Nachrichten zugehört, die aus den Buchstaben A bis C und D bis F gebildet werden. Die Markierungen M1 und M2 sind in dem dargestellten Ausführungsbeispiel strichförmig ausgebildet. Sie können jedoch auch winkelförmig ausgebildet sein. Außerdem können beide Markierungen auch auf einer Seite oder auf beiden Seiten des Textes dargestellt sein.

Bei der Darstellung in Fig. 2 sind die beiden Markierungen M1 und M2 am linken Rand des Textes angeordnet. Außerdem sind die Markierungen M1 und M2 winkelförmig ausgebildet. Zwischen den Markierungen M1 und M2 sind weitere Markierungen M vorgesehen, die strichförmig ausgebildet sind und auf diese Weise eine den Text begleitende Linie darstellen. Diese Linie muß selbstverständlich nicht durchgezogen dargestellt sein. Sie kann beispielsweise auch aus Punkten oder anderen Sonderzeichen zusammengesetzt sein.

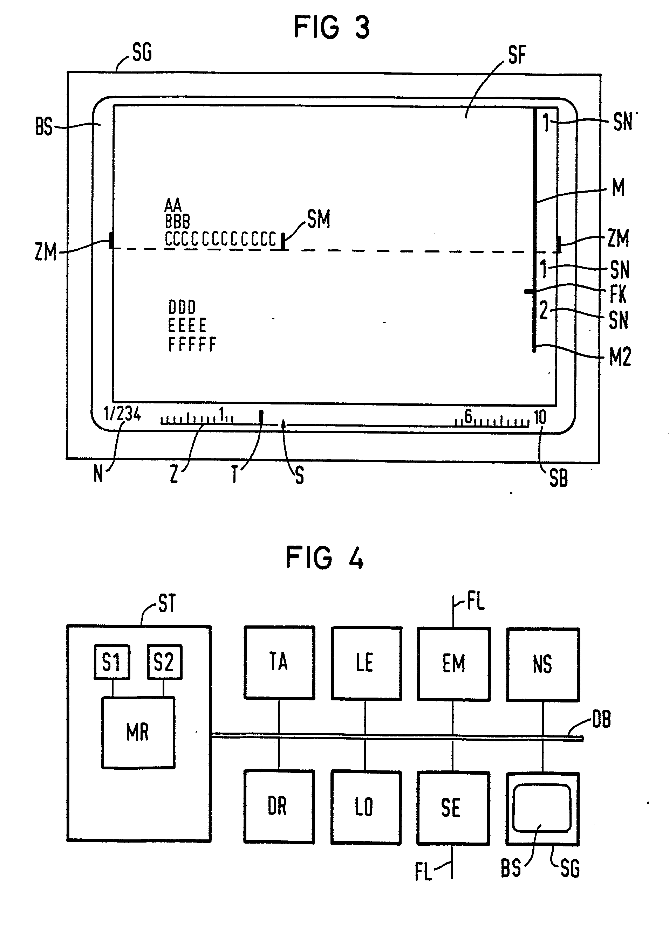

Bei der Darstellung in Fig. 3 wird angenommen, daß der Text einem weiteren, auf dem Schreibfeld SF nicht dargestellten vorangehenden Text zugehörig ist. Die Markierung M1, die den Anfang kennzeichnet, ist somit auf dem Bildschirm BS nicht dargestellt, jedoch die Markierung M2, die das Ende des Textes kennzeichnet. Die weiteren Markierungen M sind ebenfalls strichförmig ausgebildet, so daß sich wieder eine den Text als zusammenhängend kennzeichnende Linie ergibt.

Diese den Text als zusammenhängend kennzeichnende Linie enthält zusätzlich ein Formatkennzeichen FK, das beim Ausdrucken des entsprechenden Textes beispielsweise das Ende einer DIN A4 Seite kennzeichnet. Zusätzlich sind neben der Linie Seitennummern SN dargestellt, aus denen unmittelbar entnommen werden kann, auf welcher Seite der jeweilige Textteil beim Ausdrucken dargestellt werden würde. Im dargestellten Beispiel ist zu erkennen, daß der aus den Buchstaben A bis C gebildete Textteil in der Nähe des unteren Rands einer ersten Seite und der aus den Buchstaben D bis F gebildete Textteil am oberen Rand einer zweiten Seite dargestellt werden würde. Die Seitennummern SN können auch anstelle einer strichförmigen Markierung M innerhalb der Linie dargestellt werden.

Bei der in Fig. 4 als Blockschaltbild dargestellten Fernschreibmaschine oder Textstation sin an einem Datenbus DB als Eingabeeinheiten eine Tastatur TA, ein Lochstreifenleser LE und ein an einer Fernleitung FL angeschlossener Empfänger EM vorgesehen. Als Ausgabeeinheiten sind ein Lochstreifenlocher LO, ein Drucker DR, das Sichtgerät SG und ein an der Fernleitung FL ebenfalls angeschlossener Sender Se vorgesehen. Weiterhin sind an dem Datenbus DB ein Nachrichtenspeicher NS und eine Steuereinheit ST vorgesehen. Der Nachrichtenspeicher NS ist als Halbleiterspeicher, Magnetblasenspeicher oder als Floppydiskspeicher ausgebildet. Die Steuereinheit ST steuert den zeitlichen Ablauf von Funktionen der Fernschreibmaschine und enthält zweckmäßigerweise einen mit einem Programmspeicher versehenen Mikrorechner MR. Zusätzlich zu den bekannten Funktionen steuert der Mikrorechner MR bei der Anordnung auch die Darstellung der Markierungen M1 und M2, sowie der dazwischen angeordneten zusätzlichen Markierungen M, der Formatkennzeichen FK und der Seitennummern SN. Zu diesem Zweck enthält die Steuereinheit ST einen ersten Speicher S1, in dem das mittels der Tastatur TA eingengebene Format, beispielsweise DIN A4 gespeichert ist. Weiterhin enthält die Steuereinheit ST einen zweiten Speicher S2, in dem der ebenfalls mittels der Tastatur TA eingegbene Zeilenabstand gespeichert ist. Dies ist erforderlich, um das Formatkennzeichen FK am Bildschirm BS an verschiedenen Stellen darzustellen, da dort die Darstellung des Textes einzeilig erfolgt und das Ausdrucken jeweils mit dem eingestellten Zeilenabstand erfolgt. Der Mikrorechner MR muß somit in Abhängigkeit von dem eingestellten Format und dem eingestellten Zeilenabstand die Position des Formatkennzeichens FK jeweils ermitteln.

Bei der Eingabe einer neuen Nachricht wird durch den Mikrorechner MR jeweils die Nachrichtennummer N vergeben und die den Anfang des Textes bzw. der Nachricht kennzeichnende Markierung M1 wird unter Verwendung eines im Sichtgerät SG vorgesehenen Zeichengenerators dargestellt. Gleichzeitig wird ein die Markierung M1 kennzeichnendes Codewort im Nachrichtenspeicher NS an der entsprechenden Stelle gespeichert. Analog hierzu erfolgt beim Ende des Textes die Darstellung der Markierung M2 und die Darstellung der weiteren Markierungen M, die zwischen den Markierungen M1 und M2 vorgesehen sind, um eine vollständige Linie zu bilden. Diese werden jeweils mit dem Eröffnen einer neuen Zeile des Textes dargestellt.

Unter Verwendung der Inhalte der beiden Speicher S1 und S2 ermittelt der Mikrorechner MR die Seitennummern Sn und die Formatkennzeichen FK und steuert deren Darstellung auf dem Bildschirm BS und deren Einspeicherung an die entsprechenden Stellen des Nachrichtenspeichers NS.

## Patentansprüche

1. Anordnung zum Darstellen von Texten an einem Bildschirm (BS) eines Sichtgeräts (SG), bei der die Texte in einem Nachrichtenspeicher (NS) gespeichert sind und mittels eines im Sichtgerät (SG) vorgesehenen Zeichengenerators am Bildschirm (BS) dargestellt werden und bei der eine Steuereinheit (ST) vorgesehen ist, die eine Darstellung von Markierungen (M1, M2) seitlich des Textes am Bildschirm (BS) steuert, dadurch gekennzeichnet, daß die Steuereinheit (ST) derart ausgebildet ist, daß sie die Markierungen (M1, M2) derart am Bildschirm (BS) darstellt, daß sie den Anfang und das Ende eines zusammenhängenden Textes kennzeichnen.

2. Anordnung nach Anspruch 1, dadurch gekennzeichnet, daß die Darstellung der den Anfang des Textes kennzeichnenden Markierung (M1) auf der einen und der das Ende des Textes kennzeichnenden Markierung auf der anderen Seite des Textes erfolgt.

3. Anordnung nach Anspruch 1 oder Anspruch 2, dadurch gekennzeichnet, daß sowohl die den Anfang des Textes kennzeichnende Markierung (M1) als auch die das Ende des Textes kennzeichnenden Markierung (M2) auf der einen und/oder auf der anderen Seite des Textes angeordnet sind.

4. Anordnung nach Anspruch 1 oder Anspruch 3, dadurch gekennzeichnet, daß zwischen der den Anfang des Textes kennzeichnenden Markierung (M1) und der das Ende des Textes kennzeichnenden Markierung (M2) eine Darstellung von weiteren Markierungen (M) erfolgt, die eine seitlich am Text verlaufende Linie Bilden.

5. Anordnung nach einem der Ansprüche 1 bis 4, dadurch gekennzeichnet, daß die Markierungen (M1, M2, M) strichförmig ausgebildet sind.

6. Anordnung nach einem der Ansprüche 1 bis 4, dadurch gekennzeichnet, daß die den Anfang und das Ende des Textes kennzeichnenden Markierungen (M1 bzw. M2) winkelförmig ausgebildet sind.

7. Anordnung nach Anspruch 4 oder Anspruch 5, dadurch gekennzeichnet, daß die Markierungen (M1, M2, M) zur Kennzeichnung von Formaten bei einer Ausgabe der Texte auf einem Ausgabemedium als Formatkennzeichen (FK) ausgebildet sind.

8. Anordnung nach Anspruch 7, dadurch gekennzeichnet, daß die Markierungen (M1, M2, M) mit Seitennummern (SN) versehen sind.

## Revendications

1. Dispositif pour représenter des textes sur l'écran (BS) d'un visuel (SG), dans lequel les textes sont mémorisés dans une mémoire de messages (NS) et sont représentés sur l'écran (BS) au moyen d'un générateur de caractères prévu dand le visuel (SG), et dans lequel est prévue une unité de commande (ST) qui commande la représentation de repères (M1, M2) à côté du texte sur l'écran (BS), caractérisé en ce que l'unité de commande (ST) ets conçue de manière qu'elle représente les repères (M1, M2) sur l'écran (BS) de façon qu'ils marquent le début et la fin d'un texte formant un tout.

2. Dispositif selon la revendication 1, caractérisé en ce que le repère (M1) marquant le début du texte est représenté d'un côté et le repère marquant la fin du texte est représenté de l'autre côté du texte.

3. Dispositif selon la revendication 1 ou 2, caractérisé en ce que le repère (M1) marquant le début du texte comme le repère (M2) marquant la fin du texte sont disposés d'un côté et/ou de l'autre côté du texte.

4. Dispositif selon la revendication 1 ou 3, caractérisé en ce que d'autres repères (M), formant une ligne s'étendant à côté du texte, sont représentés entre le repère (M1) marquant le début et le repère (M2) marquant la fin du texte.

5. Dispositif selon une des revendications 1 à 4, caractérisé en ce que les repères (M1, M2, M) sont réalisés sous forme de traits.

6. Dispositif selon une des revendications 1 à 4, caractérisé en ce que les repères (M1, M2) marquant le début et la fin du texte sont réalisés en équerre.

7. Dispositif selon la revendication 4 ou 5, caractérisé en ce que les repères (M1, M2, M) sont réalisés comme des marques de format (FK) pour l'indication de formats en cas de sortie des textes sur un milieu de sortie.

8. Dispositif selon la revendication 7, caractérisé en ce que les repères (M1, M2, M) sont pourvus de numéros de pages (SN).

## Claims

1. An arrangement for displaying texts on a screen (BS) of a visual display unit (SG), wherein the texts are stored in a data store (NS) and are displayed on the screen (BS) by means of a character generator included in the visual display unit (SG), and wherein a control unit (ST) is provided which controls the display of marks (M1, M2) at the side of the text on the screen (BS), characterised in that the control unit (ST) is designed to be such that it displays the marks (M1, M2) on the screen (BS) in such manner that these identify the start and the end of a continuous text.

2. An arrangement as claimed in claim 1, characterised in that the mark (M1) which identifies the start of the text is displayed on one side of the text and the mark which identifies the end of the text is displayed on the side of the text.

3. An arrangement as claimed in claim 1 or claim 2, characterised in that both the mark (M1) which identifies the start of the text and the mark (M2) which identies the end of the text are arranged on one and/or the other side of the text.

4. An arrangement as claimed in claim 1 or claim 3, characterised in that between the mark (M1) identifies the start of the text and the mark (M2) which identifies the end of the text, further marks (M) are displayed which form a line extending along the side of the text.

5. An arrangement as claimed in claims 1 to 4, characterised in that the marks (M1, M2, M) are in the form of straight lines.

6. An arrangement as claimed in one of the claims 1 to 4, characterised in that the marks (M1 and M2) which identify the start and the end of the text respectively are angular.

7. An arrangement as claimed in claim 4 or claim 5, characterised in that the marks (M1, M2, M) which identify formats when texts are output on an output medium comprise format characteristics (FK).

8. An arrangement as claimed in claim 7, characterised in that the marks (M1, M2, M) are provided with page numbers (SN).

## FIG 1

SG

SF

BS

M1 — AA
BBB
CCCCCCCCCCC — SM

ZM — - - - - - - - - - - - - - - - - - - - - - - - - - - - - ZM

DDD
EEEE
FFFFF

M2

1/234 ‖╍╍╍╍╍╍1╍╍╍╍╍╍ ▮ 6╍╍╍╍╍╍10

N        Z      T    S                      SB

## FIG 2

SG

SF

BS

M1 — AA
BBB
CCCCCCCCCCC — SM

ZM — - - - - - - - - - - - - - - - - - - - - - - - - - - - - ZM

M —

DDD
EEEE
M2 — FFFFF

1/234 ‖╍╍╍╍╍╍1╍╍╍╍╍╍ ▮ 6╍╍╍╍╍╍10

N        Z      T    S                      SB

## FIG 3

## FIG 4